# EUROPEAN PATENT APPLICATION

(11) **EP 4 672 045 A1**
(43) Date of publication of application: **31.12.2025**
(21) Application number: 24306049.8
(22) Date of filing: 28.06.2024
(51) Int. Cl.: G06F 21/32, G06Q 20/40, G06V 40/10, G06V 40/70

(54) **BIOMETRIC PAYMENT INSTRUMENT AND METHOD FOR MANAGING A BIOMETRIC PAYMENT INSTRUMENT**

(71) Applicant: THALES DIS FRANCE SAS, 92190 Meudon (FR)
(72) Inventor: SALLES, Jean-Luc, 13720 La Bouilladisse (FR); GREVIN, Emmanuel, 83740 La Cadière-d'Azur (FR); BOULANGER, Nicolas, 13590 Meyreuil (FR)
(74) Representative: Quintero Romero, Manuel

(57) **Abstract**

The invention is a payment instrument (10) able to participate to a financial transaction and including a biometric sensor (54), a set (11) comprising one or more enrolled biometric data, and a matching unit (13) designed to compute a matching score (12) by comparing a biometric candidate data captured by the biometric sensor with at least one enrolled biometric data. The payment instrument comprises an indicator (15) reflecting whether an enrollment process of the set is completed or not and a trust evaluator (16) configured to compute a representativeness index (14) reflecting a level of representativeness of a user by said set. The representativeness index is separate from said indicator. The payment instrument is configured to generate a trust result (19) by checking that the representativeness index satisfies a predefined rule (17) and to contribute to user authentication during the transaction by using both said matching score and trust result.

## Description

### (Field of the invention)

The present invention relates to methods for managing payment instruments embedding a biometric sensor. It relates particularly to methods of managing biometric payment instruments deployed in the field.

### (Background of the invention)

Face-to-face financial transactions can be done today through the interaction of a payment instrument with a connected banking terminal, and the exchange of a payload with a remote server. For example, the financial transaction can be a payment transaction carried out via a Point-Of-Sale (POS) terminal. Alternatively, the financial transaction can be a cash withdrawal transaction carried out via an ATM (Automated Teller Machine) terminal. Such transactions are called in-person transactions (or proximity transactions) because the cardholder is at the same location as the terminal.

Conventional banking terminals can communicate with a payment instrument through a contact communication protocol (e.g. payment instrument inserted in the reader of the terminal) or contactless communication protocol (e.g. payment instrument is placed in proximity to the reader of the terminal).

A payment instrument can be a payment smart card embedding a biometric sensor like a fingerprint sensor. Usually, a biometric payment card has a non-volatile memory storing biometric reference data previously enrolled and a matching unit designed to compute a matching score by comparing a biometric candidate data captured by the biometric sensor with the registered biometric reference data. The matching score aims at authenticating the cardholder (i.e. card user).

Usually, the biometric authentication feature becomes available on a smart card when the enrollment process has been finalized. This happens when a certain amount of biometric reference data has been registered. In other words, the biometric authentication is activated on conventional smart cards only when the number of enrolled registered biometric reference data (also called enrolled biometric data) reaches a predefined threshold. Typically, the value of such a threshold is set between 12 and 20.

Thus, while the enrollment operation is not finalized, conventional biometric cards cannot authenticate a user by using their embedded biometric sensor and enrolled biometric reference data.

### (Summary of the Invention)

Last generation of fingerprint sensors and matching algorithms are now powerful enough to allow successful match operations based on very low amount of enrolled biometric data (also named reference templates). For example, a smart card can now authenticate a user based on its embedded biometric feature while only one biometric data has been enrolled into the card.

Thus, although the enrollment operation is not finalized, a biometric card can still authenticate the user based on the biometric data already enrolled in the card.

However, some financial institutions can be reluctant to accept financial transactions secured by a user authentication based on a very low number of stored biometric reference templates, considering this is a potential fraud risk. Since it is easier to enroll one biometric data than a large number of biometric data, they may consider that an attacker could succeed in enrolling a biometric data corresponding to a hacker that could be improperly used by the card to authenticate the hacker instead of the genuine user.

It would be useful to mitigate the risks due to the fact that the user authentication can be carried out by the card although the enrollment process is not finalized (i.e. based on a low number of biometric reference data) and to take appropriate measures.

The present invention aims at solving the above-mentioned technical problem.

An object of the present invention is a payment instrument assigned to a user and able to participate to a financial transaction. The payment instrument includes a biometric sensor, a set comprising one or more enrolled biometric data, and a matching unit which is designed to compute a matching score by comparing a biometric candidate data captured by the biometric sensor with at least one enrolled biometric data of the set. The payment instrument comprises an indicator reflecting whether the enrollment process of the set is completed or not. The payment instrument comprises a trust evaluator configured to compute a representativeness index that reflects a level of representativeness of the user by the set, said representativeness index being separate from said indicator. The payment instrument is configured to generate a trust result by checking that the representativeness index satisfies a predefined rule and to contribute to user authentication to authorize the financial transaction by using both said matching score and said trust result.

Advantageously, the matching unit may be configured to contribute to user authentication when the indicator shows that the enrollment process of the set is not completed.

Advantageously, the set may include a plurality of enrolled biometric data and the trust evaluator may be configured to compute the representativeness index based on notable relationships between the enrolled biometric data of the set.

Advantageously, the payment instrument may be configured to compute the representativeness index using a proportion of enrolled biometric data having an overlapping surface compared to the total number of enrolled biometric data of the set.

Advantageously, the set may include a plurality of enrolled biometric data and the trust evaluator may be configured to compute the representativeness index based on an history of use of the enrolled biometric data of the set.

Advantageously, the payment instrument may comprise an audit unit configured to identify a selected enrolled biometric data belonging to the set as being to be deleted by detecting that the selected enrolled biometric data has a degree of representativeness of the user lower than a preset threshold.

Advantageously, the set may include a plurality of enrolled biometric data and the audit unit may be configured to identify said selected enrolled biometric data as being to be deleted based on a combination of an history of use of the enrolled biometric data of the set and notable relationships between the enrolled biometric data of the set.

Advantageously, the audit unit may be configured to identify said selected enrolled biometric data before the financial transaction starts or after the financial transaction ends.

Advantageously, the financial transaction may be a payment transaction or a cash withdrawal transaction.

Advantageously, the payment instrument may be a smart card, a ring, a keychain, a watch, or a bracelet.

Another object of the present invention is a method for managing a payment instrument assigned to a user and able to participate to a financial transaction. The payment instrument includes a biometric sensor, a set including one or more enrolled biometric data, and a matching unit designed to compute a matching score by comparing a biometric candidate data captured by the biometric sensor with at least one enrolled biometric data of the set. The payment instrument comprises an indicator reflecting whether the enrollment process is completed in the payment instrument or not. The payment instrument comprises a trust evaluator that computes a representativeness index reflecting a level of representativeness of the user by said set, said representativeness index being separate from said indicator. The method comprises the step of generating by the payment instrument a trust result by checking that the representativeness index satisfies a predefined rule, and the step of contributing to the user authentication to authorize the financial transaction by using both said matching score and said trust result.

Advantageously, the set may include a plurality of enrolled biometric data and the trust evaluator may compute the representativeness index using notable relationships between the enrolled biometric data of the set.

Advantageously, the payment instrument may compute the representativeness index using a proportion of enrolled biometric data having an overlapping surface compared to the total number of enrolled biometric data of the set.

Advantageously, the set may include a plurality of enrolled biometric data and the trust evaluator may compute the representativeness index based on an history of use of the enrolled biometric data of the set.

Advantageously, the payment instrument may comprise an audit unit which identifies a selected enrolled biometric data belonging to the set as being to be deleted by detecting that said selected enrolled biometric data has a degree of representativeness of the user lower than a preset threshold.

### (Brief description of the drawings)

Other characteristics and advantages of the present invention will emerge more clearly from reading the following description of a number of preferred embodiments of the invention with reference to the corresponding accompanying drawings in which:
- Fig. 1 shows a diagram of architecture of a payment instrument according to an example of the invention,
- Fig. 2 shows a flow diagram for managing a biometric payment instrument according to an example of the invention,
- Fig. 3 shows an history log stored in the payment instrument according to an example of the invention,
- Fig. 4 shows a first exemplary set of enrolled biometric data stored in the payment instrument according to a first example of the invention, and
- Fig. 5 shows a second exemplary set of enrolled biometric data stored in the payment instrument according to a second example of the invention.

### (Detailed description of the preferred embodiments)

The invention may apply to any type of biometric payment instrument usually associated to a user (also called cardholder). The payment instrument may be implemented in a wide variety of device such as physical smart card, smartwatch, or wearable device for instance.

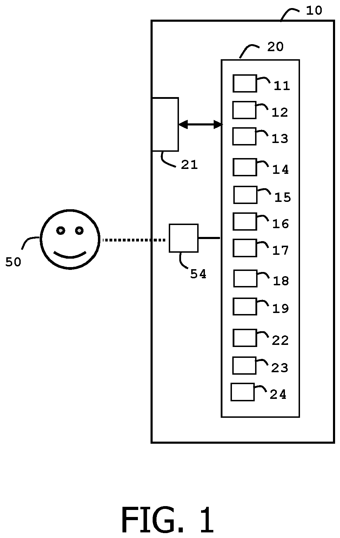

Figure 1 depicts a diagram of architecture of a payment instrument according to an example of the invention.

In this example, the payment instrument 10 is a physical banking card intended to be used by its associated genuine user 50 (i.e. bank customer or cardholder) for financial transactions like payment transactions or cash withdrawals.

The payment instrument 10 embeds a secure element 20 comprising a hardware processing unit, a non-volatile memory storing program instructions of an operating system 22, and of at least one banking application 23 designed to contribute to payment services and transactions like payment or cash withdrawal.

The payment instrument 10 can be a proximity card comprising a contactless unit 21 able to communicate through a contactless protocol as defined by the ISO 14443 standard or Near Field Communications (NFC) standards for instance.

In some embodiments, the payment instrument can be configured to communicate through a contact communication protocol in addition to the contactless communication protocol. In some embodiments, the payment instrument can be configured to communicate through a contact communication protocol only.

The payment instrument 10 comprises a fingerprint sensor 54 and a set 11 comprising one or more biometric reference data enrolled during a previous phase. The payment instrument 10 comprises a matching unit 13 which is designed to compute a matching score 12 by comparing a biometric candidate data captured by the biometric sensor with one or more biometric reference data belonging to the set 11 of previously enrolled biometric reference data.

The payment instrument 10 comprises an indicator 15 that reflects whether the enrollment process of the set 11 is completed (finalized) or not.

The payment instrument 10 comprises a trust evaluator 16 which is configured to compute a representativeness index 14 reflecting a level of representativeness of the user by the set 11. The representativeness index 14 is separate from the indicator 15 and stored in the memory of the payment instrument.

The payment instrument 10 comprises a predefined rule 17 intended to assess a security level associated with the content of the set 11 of enrolled biometric reference data.

The matching unit 13 can be configured to generate a trust result 19 by checking that the representativeness index satisfies the predefined rule 17 and to contribute to user authentication to authorize or not a financial transaction in progress by using both the trust result 19 and the matching score computed by the matching unit 13.

The representativeness index 14 can be called maturity index or global enrolment maturity index (GEMI).

Preferably, the matching unit 13 can be configured to contribute to user authentication (using a candidate biometric data captured by the sensor 54) when the indicator 15 shows that the enrollment process of the set 11 is not completed. Thus, during a financial transaction, even if the enrollment phase is not finalized, the matching unit 13 can be authorized to authenticate the user based on the already enrolled items of the set 11 and a biometric candidate data captured by the biometric sensor 54. In other words, the matching unit 13 can be empowered to authenticate the user for the purposes of the current financial transaction even if the enrollment process is not finalized in the payment instrument 10.

In practice, the matching unit 13 may not read the value of the indicator 15 and try to authenticate the user independently of the indicator 15.

In some embodiments, the set 11 may include a plurality of enrolled biometric data and the trust evaluator 16 can be configured to compute the representativeness index 14 based on notable relationships between the enrolled biometric data of the set 11.

For instance, the trust evaluator 16 can be configured to compute the representativeness index 14 as a proportion of enrolled biometric data having an overlapping surface area compared to the total number of enrolled biometric data of the set 11. In case of fingerprint, an overlapping surface area corresponds to a same part of a finger from which at least two enrolled biometric data have been created. In other words, an overlapping surface is a subset of remarkable points (like minutia) of a finger that is shared between two or more enrolled biometric data. Such a way to compute the representativeness index 14 aims at checking that the enrolled biometric data of the set 11 are originated from a unique user. The predefined rule 17 could be that the proportion of enrolled biometric data having an overlapping surface should be above a specific threshold (like 75% or 90%) or even equal to 100%.

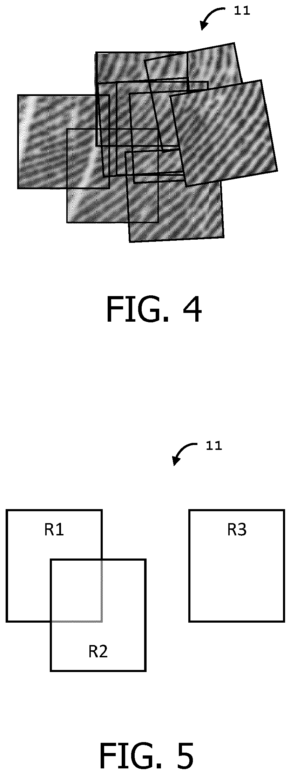

Figure 5 depicts an example the set 11 comprise three enrolled biometric data. Two of them (R1 & R2) have a shared surface area while the third one (R3) is entirely separate from the other two (no overlap of surface areas) . In such a case, the value computed for the representativeness index 14 could be equal to 66% (because two thirds of the enrolled biometric data overlap.)

In another example, the trust evaluator 16 can be configured to compute the representativeness index 14 as the ratio of unshared surface area corresponding to the ratio of surface area covered only by one enrolled biometric data compared to the total surface area covered by all enrolled biometric data of the set 11. Such a way to compute the representativeness index 14 aims to detect that the enrolled biometric data do not share a common surface area which is too large. To illustrate the purpose, a set containing three enrolled biometric data covering a large surface area would be better than a set containing five files enrolled biometric data whose surface area are almost equal. The associated predefined rule 17 could be that the ratio of unshared surface area should be larger than a preset threshold like 30%, 60% or 80%.

In another example, the trust evaluator 16 can be configured to compute the representativeness index 14 as a value reflecting whether, when the number of enrolled biometric data belonging to the set 11 is higher than a preset number (e.g. 12 or 15), each enrolled biometric data of the set 11 has its surface area partially in common with at least two (or three) other enrolled biometric data belonging to the set 11.

Such a case is depicted at Figure 4 where each of the enrolled biometric data (of the set 11) has a shared surface area with two or more other enrolled biometric data.

Advantageously, the trust evaluator 16 can be configured to compute the representativeness index 14 according to the above-presented examples to check both that the surfaces of the enrolled biometric data are sufficiently diversified and that the enrolled biometric data come from a single user. In such a case, the trust evaluator 16 can use a composite predefined rule 17 for checking each part of the computed representativeness index 14.

In another example, the payment instrument can be configured to record an history of use (by the matching unit 13) of the enrolled biometric data of the set 11.

Such an history can be stored in a log and reflect the sequence of comparison attempts performed by the matching unit 13. For instance, the history can contain, for each comparison, an identifier of the enrolled biometric data and the associated computed matching score.

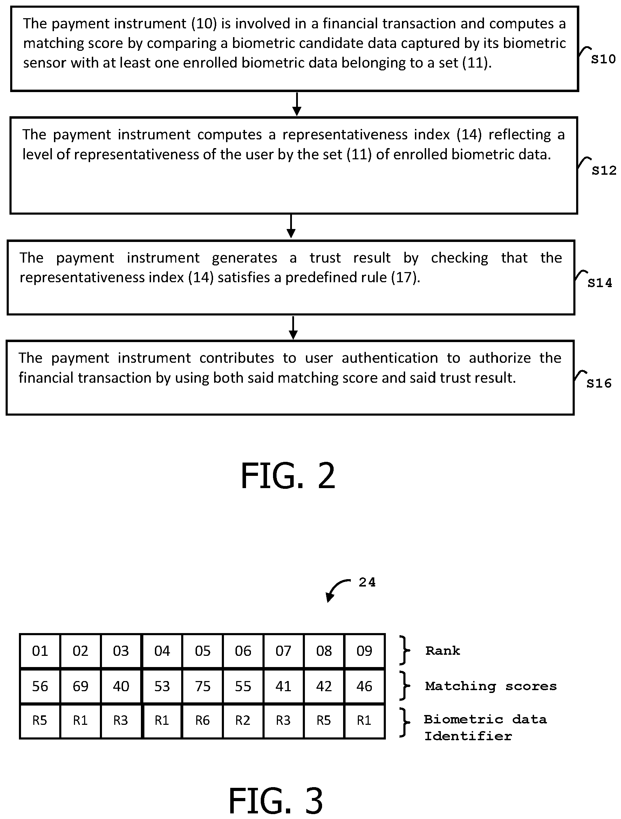

Figure 3 depicts an history log created in the payment instrument according to an example of the invention.

The history log 24 contains a sequence of 9 matching scores that have been generated by the payment instrument during previous financial transactions involving the payment instrument 10.

In order to clarify the reading of the history log 24 shown at Figure 3, a first row has been added to indicate the rank of each matching score of the sequence of matching scores.

The second row contains the value of the matching scores computed by the matching unit 13. In this example, the matching score are expressed as percentage of matching between 0% and 100%.

The third row contains the identifier of the enrolled biometric data for which the matching unit 13 computed the matching score stored in the second row. In this example, the identifiers are expressed in the form Rx, where x stand for the number of the used enrolled biometric data. In this example, the set 11 comprises 6 enrolled biometric data. By reading the history 24, it is visible that the first enrolled biometric data (R1) has been used three times by the matching unit 13 while the fourth enrolled biometric data (R4) has not been used by the matching unit 13 in the sequence of the last nine authentication attempts.

The trust evaluator 16 can be configured to compute the representativeness index 14 based on the history of use of the enrolled biometric data of the set 11. For instance, assuming that the set 11 comprises N enrolled biometric data, the trust evaluator 16 could compute the representativeness index 14 as a ratio using the history for the N last financial transactions. The ratio could be the number of different enrolled biometric data that matched a candidate (i.e. for which the computed matching score was above a preset threshold) divided by N. The associated predefined rule 17 could be that the computed ratio should be larger than a preset threshold like 20%, 40%, 70% or 80%.

Alternatively, the trust evaluator 16 could compute the representativeness index 14 as a ratio between the number of enrolled biometric data which never matched a biometric candidate (or have never been used by the matching unit 13) and the number of enrolled biometric data belonging to the set 11. The associated predefined rule 17 could be that the computed ratio should be lower than a preset threshold like 5%, 10% or 20%.

Advantageously, the trust evaluator 16 can be configured to compute the representativeness index 14 according to the three above-presented examples. In some embodiments, the representativeness index 14 (GEMI) can be computed as the weighted sum of each representativeness index presented above, each index having its own weight previously defined during a personalization phase.

As can be understood by those skilled in the art, the representativeness index 14 can be generated according to different appropriate mathematical functions, in particular the GEMI can be an aggregation of as many representativeness subindexes.

In some embodiments, the banking application 23 can comprise a Card risk management unit including an enrolment maturity index offline limit (EMIOL) whose value can be defined by the issuer of the banking application during an initial personalization phase. The Card risk management unit can be configured to generate the trust result 19 by checking (by applying predefined rule 17) that the representativeness index 14 reaches the EMIOL before validating the authentication of the user using the matching score computed by the matching unit 13. If the representativeness index 14 does reach the EMIOL, the Card risk management unit can be configured to apply conventional card risk management (CRM) rules.

If the representativeness index 14 does not reach the EMIOL, the Card risk management unit can be configured to send the computed representativeness index 14 to the remote bank server through a dedicated Issuer Discretionary Data (IDD) field as defined by EMVCo^{®} specifications. Then the remote bank server can take a transaction approval decision based on both the representativeness index 14 and transaction parameters like the transaction amount, the merchant type or the location of the Point-Of-Sale (POS) terminal for instance.

In some embodiments, the payment instrument can comprise an audit unit 18 which is configured to identify a selected enrolled biometric data belonging to the set 11 as being to be deleted by detecting that this selected enrolled biometric data has a degree of representativeness of the user lower than a preset threshold.

The audit unit 18 can rely on the history of use (by the matching unit 13) of the enrolled biometric data of the set 11 to detect which enrolled biometric data never matched a biometric candidate or has never been used by the matching unit 13 during the last M financial transactions. The number M can be set as a fixed number (like 10 or 20) or can depend on the number of enrolled biometric data belonging to the set 11.

It can be noted that the matching unit 13 can compute two or more matching scores (using different enrolled biometric data) during the same financial transaction for example when some of them failed to reach the minimum acceptable level to authenticate the user.

The audit unit 18 can be designed to consider that an enrolled biometric data which never leads to a successful match during the last M financial transactions (or match attempts) has a degree of representativeness of the user which is too low and should be removed from the set 11.

Separately or in addition to relying on history, the audit unit 18 can be configured to detect an enrolled biometric data has become useless based on the percentage of overlap between the surface area covered by one enrolled biometric data and the totality of the surface areas of all enrolled biometric data of the set 11. The audit unit 18 can be designed to consider that an enrolled biometric data has a degree of representativeness of the user 50 which is too low if the percentage of overlap is not in a preset range. A percentage of overlap lower than a first threshold (like 5% or 150) can be interpreted as reflecting an enrolled biometric data too isolated from the others. A percentage of overlap higher than a second threshold (like 88% or 96%) can be interpreted as reflecting an enrolled biometric data that is redundant with at least one other enrolled biometric data of the set 11.

Separately or in addition to above-presented embodiments, the audit unit 18 can be configured to detect an enrolled biometric data has become useless based on the number of remarkable points (like a minutia) of the enrolled biometric data.

Such a cleaning operation may be required for certain categories of people such as children whose biometric parameters may change rapidly, manual workers whose fingers may wear out or people whose fingers are sensitive to seasonal changes, probably due to the ambient temperature of the degree of humidity.

In some embodiments, the audit unit 18 can be configured to identify the selected enrolled biometric data and to remove it from the set 11 when a financial transaction is in progress.

In some embodiments, the audit unit 18 can be configured to identify the selected enrolled biometric data and to remove it from the set 11 before a financial transaction starts, after a financial transaction ends or even in the absence of financial transaction. Thus, by cleaning the content of the set 11, the degree of representativeness of the user by the content of the set 11 can be improved even if no financial transaction happens, provided that the payment instrument is powered either by an internal energy source or an external power supply.

It can be noted that the audit unit 18 can perform the cleaning treatment (i.e. detection and removal of the selected enrolled biometric data) even if the biometric sensor or the matching unit is not triggered/used.

Although described as a smart card in the above-presented embodiments, the payment instrument can have another form factor like a payment ring, a payment keychain, a watch embedding a payment application, or a payment bracelet.

Figure 2 depicts a flow diagram for managing a payment instrument according to an example of the invention.

The payment instrument can be the payment card of Figure 1 for example.

The payment instrument comprises an indicator 15 reflecting whether the enrollment process is completed in the payment instrument or not.

During a financial transaction, the matching unit 13 of the payment instrument 10 computes (step S10) a matching score by comparing a biometric candidate data captured by the biometric sensor 54 with at least one enrolled biometric data of the set 11.

Then, the trust evaluator 16 of the payment instrument computes (step S12) a representativeness index 14 reflecting a level of representativeness of the user 50 of the payment instrument by said set. This representativeness index 14 is separate from the indicator 15.

Then, the payment instrument generates (step S14) a trust result 19 by checking that the representativeness index 14 satisfies a predefined rule 17.

Then the payment instrument contributes to the user authentication (step S16) to authorize the financial transaction by using both the matching score 12 and the trust result 19.

In some embodiments, the set 11 includes a plurality of enrolled biometric data and the payment instrument can compute (step S12) the representativeness index 14 based on notable relationships between the enrolled biometric data of the set 11.

For example, the payment instrument can compute the representativeness index 14 using a proportion of enrolled biometric data having an overlapping surface area compared to the total number of enrolled biometric data of the set 11.

In another example (which can be combined with the preceding one), the trust evaluator 16 can compute the representativeness index 14 based on an history of use (by the matching unit 13) of the enrolled biometric data of the set 11.

In another example, the payment instrument can comprise an audit unit 18 which identifies a selected enrolled biometric data belonging to the set 11 as being to be deleted by detecting that the selected enrolled biometric data has a degree of representativeness of the user lower than a preset threshold. Then, the audit unit 18 removes the selected enrolled biometric data from the set 11.

The audit unit 18 can perform identification and removal of the selected enrolled biometric data independently on the existence of a pending financial transaction. Notably, the audit unit 18 can perform identification and removal of the selected enrolled biometric data even if no financial transaction is in progress.

The invention is not limited to the described embodiments or examples. In particular, the described examples and embodiments may be combined.

The invention is not limited to Banking smart cards and applies to any payment instruments embedding a biometric sensor and able to participate to a financial transaction.

The invention is not limited to payment instruments embedding a fingerprint sensor and applies to payment instruments embedding other types of biometric sensor. For instance, the biometric data captured by the sensor can be related to iris.

Thanks to some embodiments of the invention, the payment instrument can assess the degree of representativeness of the user 50 by its own set of already enrolled biometric data. Consequently, when an authentication of the cardholder is performed based on a biometric data captured by the biometric sensor, the payment instrument can adapt its contribution to the user authentication according to the trust result of a check involving both the representativeness index and a predefined rule. Depending on this trust result and a computed biometric matching score, the card may consider the user is successfully authenticated or require a remote server to complete the user authentication.

It can be noted that the representativeness index of the invention is different from parameters that can be chosen for setting the False Rejection Rate (FRR) and the False Acceptance Rate (FAR) of the matching unit.

Thanks to some embodiments of the invention, the payment instrument can detect that an element of the set of enrolled biometric data is no longer sufficiently representative of the user of the payment instrument and remove the detected enrolled biometric data from the set. In the same way, the payment instrument may detect biometric data unduly enrolled by a person different from the genuine user and delete wrong enrolled biometric data from the set of the payment instrument.

## Claims

1. A payment instrument (10) assigned to a user (50) and able to participate to a financial transaction, the payment instrument including a biometric sensor (54), a set (11) including one or more enrolled biometric data, and a matching unit (13) designed to compute a matching score (12) by comparing a biometric candidate data captured by the biometric sensor with at least one enrolled biometric data of the set,
wherein the payment instrument comprises an indicator (15) reflecting whether an enrollment process of the set is completed or not,
wherein the payment instrument comprises a trust evaluator (16) configured to compute a representativeness index (14) reflecting a level of representativeness of the user by said set, said representativeness index being separate from said indicator (15), and
wherein the payment instrument is configured to generate a trust result (19) by checking that the representativeness index satisfies a predefined rule (17) and to contribute to user authentication to authorize the financial transaction by using both said matching score and said trust result.

2. The payment instrument according to claim 1, wherein the matching unit (13) is configured to contribute to user authentication when the indicator (15) shows that the enrollment process of the set is not completed.

3. The payment instrument according to any of the preceding claims, wherein the set (11) includes a plurality of enrolled biometric data and wherein the trust evaluator (16) is configured to compute the representativeness index (14) based on notable relationships between the enrolled biometric data of the set.

4. The payment instrument according to claim 3, wherein the payment instrument is configured to compute the representativeness index (14) using a proportion of enrolled biometric data having an overlapping surface compared to the total number of enrolled biometric data of the set.

5. The payment instrument according to claim 1 or 2, wherein the set (11) includes a plurality of enrolled biometric data and wherein the trust evaluator (16) is configured to compute the representativeness index (14) based on an history of use of the enrolled biometric data of the set.

6. The payment instrument according to any of the preceding claims, wherein the payment instrument comprises an audit unit (18) configured to identify a selected enrolled biometric data belonging to the set (11) as being to be deleted by detecting that said selected enrolled biometric data has a degree of representativeness of the user lower than a preset threshold.

7. The payment instrument according to claim 6, wherein the set (11) includes a plurality of enrolled biometric data and wherein the audit unit (18) is configured to identify said selected enrolled biometric data as being to be deleted based on a combination of an history of use of the enrolled biometric data of the set and notable relationships between the enrolled biometric data of the set.

8. The payment instrument according to claim 6 or 7, wherein the audit unit (18) is configured to identify said selected enrolled biometric data before the financial transaction starts or after the financial transaction ends.

9. The payment instrument according to any of the preceding claims, wherein the financial transaction is payment transaction or a cash withdrawal transaction.

10. The payment instrument according to any of the preceding claims, wherein the payment instrument is a smart card, a ring, a keychain, a watch, or a bracelet.

11. A method for managing a payment instrument (10) assigned to a user (50) and able to participate to a financial transaction, the payment instrument including a biometric sensor (54), a set (11) including one or more enrolled biometric data, and a matching unit (13) designed to compute (S10) a matching score (12) by comparing a biometric candidate data captured by the biometric sensor with at least one enrolled biometric data of the set,
wherein the payment instrument comprises an indicator (15) reflecting whether an enrollment process is completed in the payment instrument or not,
wherein the payment instrument comprises a trust evaluator (16) that computes (S12) a representativeness index (14) reflecting a level of representativeness of the user by said set, said representativeness index being separate from said indicator (15), and
wherein the method comprises:
generating (S14) by the payment instrument a trust result (19) by checking that the representativeness index satisfies a predefined rule (17), and
contributing to user authentication (S16) to authorize the financial transaction by using both said matching score and said trust result.

12. The method according to claim 11, wherein the set (11) includes a plurality of enrolled biometric data and wherein the trust evaluator (16) computes the representativeness index (14) based on notable relationships between the enrolled biometric data of the set.

13. The method according to claim 12, wherein the payment instrument computes the representativeness index (14) using a proportion of enrolled biometric data having an overlapping surface compared to the total number of enrolled biometric data of the set.

14. The method according to claim 12 or 13, wherein the set (11) includes a plurality of enrolled biometric data and wherein the trust evaluator (16) computes the representativeness index (14) based on an history of use of the enrolled biometric data of the set.

15. The method according to claim 12, 13 or 14, wherein the payment instrument comprises an audit unit (18) which identifies a selected enrolled biometric data belonging to the set (11) as being to be deleted by detecting that said selected enrolled biometric data has a degree of representativeness of the user lower than a preset threshold.
